# EUROPÄISCHE PATENTSCHRIFT

(11) **EP 0 915 789 B1**
(45) Veröffentlichungstag und Bekanntmachung des Hinweises auf die Patenterteilung: **24.07.2002**
(21) Anmeldenummer: 97934444.7
(22) Anmeldetag: 04.07.1997
(51) Int. Cl.: B60T 8/88

(54) **MIKROPROZESSORANORDNUNG FÜR EIN FAHRZEUG-REGELUNGSSYSTEM**
MICROPROCESSOR ARRANGEMENT FOR A VEHICLE-CONTROL SYSTEM
SYSTEME DE MICROPROCESSEURS POUR SYSTEME DE REGULATION DE VEHICULE

(30) Priorität: 02.08.1996 DE 19631309
(43) Veröffentlichungstag der Anmeldung: 19.05.1999
(73) Patentinhaber: Continental Teves AG & Co. oHG, 60488 Frankfurt (DE)
(72) Erfinder: FENNEL, Helmut, D-65812 Bad Soden (DE); KANT, Bernhard, D-65239 Hochheim (DE); ESSELBRÜGGE, Hermann, D-64331 Weiterstadt (DE); ZYDEK, Michael, D-35428 Langgöns (DE); GIERS, Bernhard, D-60320 Frankfurt am Main (DE)
(74) Vertreter: Blum, Klaus-Dieter
(86) Internationale Anmeldenummer: EP9703528
(87) Internationale Veröffentlichungsnummer: WO9805540

(56) Entgegenhaltungen:
- EP-A- 0 496 509
- WO-A-94/00682
- DE-A- 4 302 925
- DE-A- 4 439 060
- STÖCKER ET AL.: "ZUVERLÄSSIGKEIT VON ELEKTRONISCHEN BAUTEILEN IM AUTOMOBIL" ATZ, Bd. 93, Nr. 7/8, Juli 1991 - August 1991, STUTTGART, DE, Seiten 406-414, XP000267526

## Beschreibung

Die Erfindung bezieht sich auf eine Mikroprozessoranordnung der im Oberbegriff des Anspruches 1 definierten Art. Solche Fahrzeug-Regelungssystemen umfassen u.a. Antiblockiersysteme (ABS), Antriebsschlupfregelungen (ASR), Systeme zur elektronischen Regelung der Bremskraftverteilung (EBV), Giermomentenregelungen und Fahrstabilitäts-Regelungssysteme (GMR, FSR oder ASMS) usw..

Es ist eine große Anzahl solcher Regelungssysteme und Systemvarianten bekannt. Die Bedeutung derartiger Systeme nimmt heutzutage wegen der Forderung nach erhöhter Sicherheit und erhöhtem Komfort rapide zu.

Es ist auch schon bekannt, mehrere Regelsysteme zu einem Verbund zusammenzuschließen, weil die verschiedenen Funktionen sich gegenseitig beeinflussen und weil Teile verschiedener Regelsysteme, z. B. Sensoren, Schaltkreise zur Ermittlung und Verarbeitung von Eingangs-Regelgrößen, Überwachungssysteme usw., gemeinsam genutzt werden können.

Zur Lösung komplexer Regelaufgaben werden vielfach Mikrorechner-Strukturen unterschiedlicher Art eingesetzt. Aus der DE 32 34 637 C2 ist z.B. ein Antiblockiersystem bekannt, dessen Regler zwei oder mehrere parallel arbeitende Mikrocontroller zur Erzeugung der Bremsdrucksteuersignale enthält. Diese Mikrocontroller verarbeiten die gleichen Eingangssignale nach einem identischen Computerprogramm. Die Ausgangssignale und interne Signale der Mikrocontroller werden auf Übereinstimmung überwacht, um Fehlfunktionen in einem der beiden Controller zu erkennen. Weichen die redundant in den Mikrocontrollern verarbeiteten Signale voneinander ab, wird die elektronische Regelung abgeschaltet, um sicherzustellen, daß auch beim Auftreten eines Fehlers in der Elektronik die Bremsenfunktion, wenn auch ungeregelt, erhalten bleibt.

Aus der DE 41 37 124 A1 ist auch bereits eine derartige Schaltungsanordnung mit sogenannter asymmetrischer Redundanz bekannt. Die Eingangssignale des Regelungssystems, nämlich die das Drehverhalten wiedergebenden, mit Radsensoren gewonnenen Signale, werden bei dieser Schaltungsanordnung zwei parallelen Mikrocontrollern zugeleitet, von denen jedoch nur einer das volle Regelungsprogramm abarbeitet, während der zweite Mikrocontroller die Eingangsinformationen in vereinfachter Form nachbildet und nach vereinfachten Algorithmen verarbeitet. Durch Vergleich der Datenverarbeitungsergebnisse beider Mikrocontroller auf Übereinstimmung oder zumindest auf Plausibilität läßt sich trotz der vereinfachten Datenverarbeitung eine Fehlfunktion oder ein Defekt in der Elektronik erkennen.

Ferner ist aus der DE 44 39 060 A1 (P 7714) eine Mikroprozessoranordnung der eingangs genannten Art bekannt, die mehrere, untereinander durch Bus-Systeme verbundene Mikroprozessor-Systeme aufweist. Mit dieser Anordnung kann eine Blockierschutz- und eine Antriebsschlupfregelung sowie mindestens eine weitere, rechenaufwendige Regelungsfunktion, einschließlich der Überwachungsfunktionen, durchgeführt werden. Diese bekannte Mikroprozessoranordnung umfaßt drei Mikroprozessorsysteme, auf die die einzelnen Funktionen derart aufgeteilt sind, daß das erste Mikroprozessorsystem zusammen mit dem zweiten Mikroprozessorsystem die ABS- und ASR-Funktion, einschließlich der Überwachung dieser Funktionen übernimmt. Das dritte Mikroprozessorsystem führt zusammen mit dem zweiten Mikroprozessorsystem die weitere, rechenaufwendige Regelfunktion (GMR) und deren Überwachung aus. Dabei wird zur Überwachung von der asymmetrisch redundanten (mit Hilfe verschiedenartiger Rechenprozesse oder Computersysteme) oder symmetrisch redundanten (mit Hilfe gleichartiger Rechenprozesse oder Computersysteme) Datenverarbeitung in jeweils zwei Mikroprozessorsysteme Gebrauch gemacht.

Durch die in der vorgenannten DE 44 39 060 A1 beschriebene Unterbringung der verschiedenen Funktionen in nur drei Mikroprozessorsystemen, einschließlich der redundanten Signalverarbeitung, die zur Überwachung dient, wird eine hohe Betriebssicherheit erreicht; außerdem wird es möglich, beim Erkennen bestimmter Fehlfunktionen einer Regelungskomponente nur diese abzuschalten und andere Regelungsfunktionen fortzuführen.

Der vorliegenden Erfindung liegt nun die Aufgabe zugrunde, eine Mikroprozessoranordnung für ein komplexes, aus mehreren Regelungskomponenten bestehendes Fahrzeug-Regelungssystem zu entwickeln, das eine noch bessere, feinere, abgestufte Zuordnung der Überwachung einzelner Regelungsfunktionen oder Regelungssysteme an den Sicherheitsbedarf bzw. Bedeutung dieser Funktionen für die Sicherheit des Fahrzeugs ermöglicht. Es sollte gewissermaßen ein abgestuftes Sicherheitskonzept verwirklicht werden.

Es hat sich gezeigt, daß diese Aufgabe durch die im Anspruch 1 beschriebene Mikroprozessoranordnung gelöst werden kann, deren Besonderheit darin besteht, daß zwei gleichartige Haupt-Mikroprozessorsysteme vorhanden sind, die zur redundanten Datenverarbeitung eingesetzt werden, daß ferner die Eingangssignalaufbereitung und die Verarbeitung nach vereinfachten Algorithmen, also auf Basis asymmetrischer Redundanz, in einem dritten Mikroprozessorsystem untergebracht sind und daß schließlich die Ausgangs- und/oder Zwischenergebnisse der in den Haupt-Mikroprozessorsystemen ablaufenden Datenverarbeitung untereinander auf Übereinstimmung verglichen und jeweils mit den Ausgangs- und/oder Zwischenergebnissen der vereinfachten Datenverarbeitung verglichen und auf Plausibilität überprüft werden.

Nach einer vorteilhaften Ausführungsart ist es zweckmäßig, wenn beim Vergleich und Auswerten der redundant verarbeiteten Daten zwischen "sicherheitskritischen" und "funktionswesentlichen" oder im Hinblick auf die Sicherheit weniger kritischen Daten unterschieden wird. Treten Abweichungen zwischen den redundant verarbeiteten sicherheitskritischen Daten auf, wird das gesamte Fahrzeug-Regelungssystem abgeschaltet, oder es werden zumindest die von den nicht übereinstimmenden Daten betroffenen Regelungen außer Funktion gesetzt. Bei Abweichungen zwischen weniger sensiblen, funktionswichtigen Daten wird durch individuellen Vergleich der Daten der beiden Haupt-Mikroprozessorsystemen mit den Ergebnissen der vereinfachten Datenverarbeitung das fehlerhafte Haupt-Mikroprozessorsystem ermittelt. Mit Hilfe des intakten Mikroprozessorsystems werden dann die Regelungsfunktionen vollständig oder eingeschränkt fortgesetzt.

Beim Auftreten von Diskrepanzen zwischen den Datenverarbeitungs-Ergebnissen der Haupt-Mikroprozessorsysteme können diese beiden Prozessorsysteme nacheinander weggeschaltet werden, worauf dann die Regelungsfunktionen, wenn nach dem Wegschalten des Systems die Datenverarbeitungsergebnisse mit dem Ergebnis der vereinfachten Datenverarbeitung übereinstimmen bzw. plausibel sind, auf Basis des ordnungsgemäßen, intakten Haupt-Mikroprozessorsystems und der Überwachung auf Plausibilität durch das dritte Mikroprozessorsystem zumindest eingeschränkt fortgesetzt werden. Es werden natürlich nur die funktionswesentlichen, nicht die sicherheitskritischen Datenverarbeitungs-Vorgänge und Regelungsfunktionen fortgesetzt.

Andererseits kann auch die Schaltung derart ausgelegt werden, daß beim Auftreten von Diskrepanzen zwischen den Datenverarbeitungsergebnissen der Haupt-Mikroprozessorsysteme die Datenverarbeitungs-Vorgänge und Regelfunktionen auf Basis der Ergebnisse fortgesetzt werden, die den durch die vereinfachte Datenverarbeitung ermittelten Ergebnissen näher sind. Eine solche Vorgehensweise ist allerdings nicht in allen Fällen zweckmäßig, weil eine derartige Auslegung zu Problemen führen kann, wenn sich aufgrund der Störungen Zufallsergebnisse einstellen. Sicherer ist es daher, die beiden Haupt-Mikroprozessorsysteme, wie zuvor genannt, nacheinander wegzuschalten und dadurch das fehlerhafte System zu ermitteln.

Nach einem anderen Ausführungsbeispiel der Erfindung ist es vorgesehen, beim Auftreten von Diskrepanzen zwischen den Datenverarbeitungsergebnissen in Abhängigkeit von dem Maß der Abweichung oder der Anzahl der Nicht-Übereinstimmungen pro Zeiteinheit bestimmte Regelungsfunktionen oder Systemfunktionen aufzuheben, wobei wiederum zwischen "sicherheitskritischen" und bezogen auf die Sicherheit "unkritischen" Regelungsvorgängen und Systemfunktionen unterschieden wird.

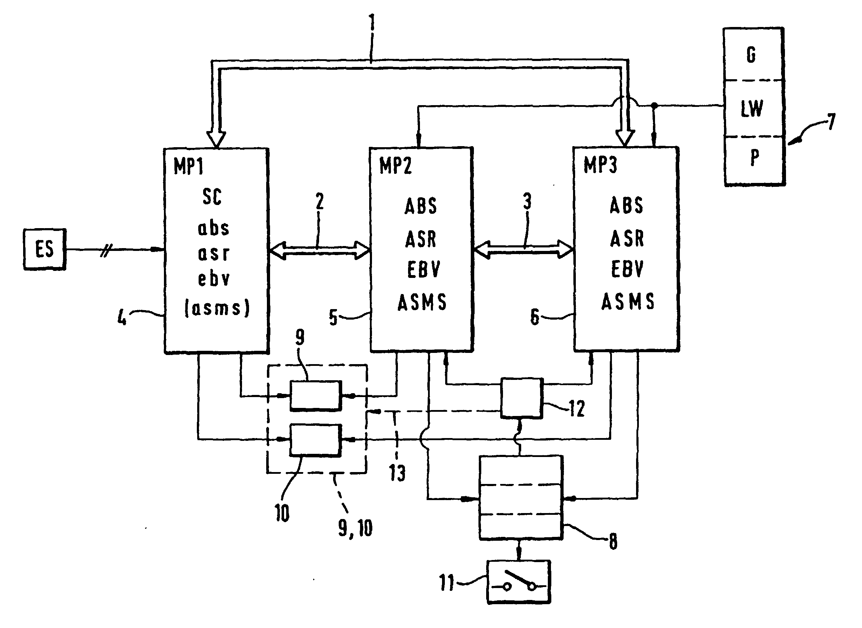

Weitere Einzelheiten, Vorteile und Anwendungsmöglichkeiten der Erfindung gehen aus der folgenden Beschreibung anhand eines Ausführungsbeispiels der Erfindung hervor. Die beigefügte Figur zeigt in vereinfachter schematischer Darstellung den prinzipiellen Aufbau einer Mikroprozessoranordnung nach der Erfindung.

Wie der Darstellung zu entnehmen ist, umfaßt die erfindungsgemäße Mikroprozessoranordnung drei Mikroprozessorsysteme 4,5,6 (MP1, MP2 und MP3), die untereinander durch ein Bus-System, im dargestellten Beispiel durch einen Ringbus 1,2,3 miteinander verbunden sind. Ein sternförmiger Bus anstelle des Ringbusses 1,2,3 käme ebenfalls in Frage.

Mit "ES" sind in der Abbildung die Eingangssignale symbolisiert, die über eine Vielfachleitung dem Mikroprozessor 4 (MP1) zugeführt werden. Bei einem Fahrzeug-Regelungssystem mit ABS, ASR, EBV etc. werden dem ersten Mikroprozessorsystem 4 (MP1) als Eingangsinformationen Sensorsignale zugeführt, die das Drehverhalten der einzelnen Fahrzeugräder wiedergeben. Für eine Fahrstabilitätsregelung (GMR, FDR oder ASMS genannt) werden zusätzliche Informationen über den Gierwinkel, Gierwinkelgeschwindigkeit, Lenkwinkel, Bremsdruck usw. benötigt. Diese Informationen werden mit entsprechenden Sensoren gewonnen oder, soweit möglich, aus den vorliegenden Informationen, insbesondere aus den Radsensorinformationen, rechnerisch ermittelt. Diese zusätzlichen Sensoren und Informationen werden in der Darstellung durch eine Sensoreinheit 7 symbolisiert, die in diesem Beispiel einen Gierwinkelsensor G, einen Lenkwinkelsensor LW und einen Drucksensor P umfaßt. In diesem Fall wird das Ausgangssignal der Sensoreinheit 7 direkt den beiden Mikroprozessorsystemen MP2 und MP3 parallel zugeführt. In einem anderen, nicht dargestellten Ausführungsbeispiel ist die Signalaufbereitung für diese Informationen ebenfalls in dem Eingangsmikroprozessorsystem 4 (MP1) untergebracht.

Bei der erfindungsgemäßen Mikroprozessoranordnung ist eine redundante Datenverarbeitung in zwei vollwertigen Mikroprozessorsystemen 5,6 (MP2, MP3) vorgesehen. Im vorliegenden Beispiel dient die Mikroprozessoranordnung sowohl zur Blokkierschutzregelung (ABS), als auch zur Antriebsschlupfregelung (ASR), Regelung der Bremskraftverteilung (EBV) und Fahrstabilitätsregelung (ASMS; automatisches Stabilitäts-Management-System).

In dem dritten Mikroprozessorsystem MP1, das im Gegensatz zum MP2 und MP3 durch ein vereinfachtes System realisiert ist, findet vor allem die Aufbereitung und Verarbeitung der Eingangssignale (Signal Conditioning) statt. Außerdem sind in dem Mikroprozessorsystem "Nachbildungen" abs, asr, ebv (asms), nämlich der in den beiden Prozessorsystemen MP2 und MP3 installierten Regelungssystemen ABS, ASR, EBV, ASMS untergebracht."asms" wurde im MP1 in Klammern gesetzt, weil in einem bevorzugten Ausführungsbeispiel dieses Regelungssystem aus Sicherheitsgründen ausschließlich durch symmetrische Redundanz, nicht durch eine Nachbildung mit vereinfachten Algorithmen, überwacht wurde. Es ist jedoch durchaus möglich, zumindest einige Funktionen des Stabilitätssystems (ASMS) durch asymmetrische Redundanz zu überwachen.

In der Abbildung sind außerdem die erfindungswesentlichen Redundanzglieder oder Vergleicher 8, 9 und 10 symbolisch dargestellt. In der Schaltung 8 werden die Endergebnisse und/oder Zwischenergebnisse der beiden Haupt-Mikroprozessorsysteme MP2 und MP3 auf Übereinstimmung verglichen. Die Überwachung beruht auf der sogenannten "symmetrischen" Redundanz. Treten Diskrepanzen auf bzw. besteht keine vollständige Übereinstimmung der dem Redundanzglied 8 zugeführten Datenverarbeitungs-Ergebnisse, wird, wenn es sich um sicherheitskritische Daten, Regelungs- oder Systemfunktionen handelt, die gesamte Regelung abgeschaltet. Dies symbolisiert ein Kontakt 11, der das Regelungssystem nur dann freigibt oder einschaltet, wenn die verglichenen Signale vollständig übereinstimmen.

Mit Hilfe der Vergleicher oder Redundanzglieder 9,10 werden außerdem die Datenverarbeitungsergebnisse (End- und/oder Zwischenergebnisse) der Haupt-Mikroprozessorsysteme 2,3 mit den auf Basis der vereinfachten Algorithmen gewonnenen Datenverarbeitungs-Ergebnisse auf Übereinstimmung bzw. auf Plausibilität überwacht. Im Vergleicher 9 findet die Überprüfung der Ergebnisse bzw. der Arbeitsweise des Mikroprozessorsystems MP2, im Vergleicher 10 die Überprüfung des Mikroprozessorsystems MP3 statt. Die gestrichelte, von der Schaltung 12 zu der Schaltung (9,10) führende Datenleitung 13 deutet an, daß diese Überprüfung auf Plausibilität nur für die funktionswesentlichen, nicht jedoch für die sicherheitskritischen Daten bzw. Regelungs- oder Systemfunktionen der Haupt-Mikroprozessoren 5,6 (MP2, MP3) gilt. Natürlich gibt es eine Vielfalt von Möglichkeiten, zwischen sicherheitskritischen und funktionswesentlichen oder weniger kritischen Funktionen zu unterscheiden und das Sicherheitskonzept entsprechend abzustufen. Beispielsweise kann das wiederholte Auftreten einer Fehlfunktion, die an sich weniger kritisch ist, als erhöhtes Sicherheitsrisiko bewertet werden und daher zur Abschaltung führen.

Ein vorteilhaftes Ausführungsbeispiel der Erfindung besteht darin, daß beim Auftreten eines funktionswesentlichen, für die Sicherheit nicht kritischen Fehlers über den Schaltkreis 12 und die Vergleicher 9, 10 der Fehler lokalisiert wird. Hierzu werden nacheinander die Mikroprozessorsysteme MP2 und MP3 weggeschaltet und, wenn nunmehr die Übereinstimmung oder Plausibilität der Datenverarbeitungs-Ergebnisse vom Vergleicher 9 oder 10 festgestellt wird, die Regelungsfunktion, zumindest für eine vorgegebene Zeitspanne oder bis zu einem bestimmten Ereignis - zum Beispiel bis zum Ende des gerade laufenden Regelzyklus - fortgesetzt.

Ein Beispiel für eine sicherheitskritische Funktion ist bei einer Fahrstabilitätsregelung (ASMS) das Einsetzen des Bremsvorganges. Ein "ungerechtfertigtes Einbremsen" muß aus Sicherheitsgründen verhindert werden. Wird in einem solchen Fall durch den Vergleicher 8 eine Diskrepanz ermittelt, wird das ASMS außer Funktion gesetzt. Außerdem wird in diesem Beispiel der Fehler mit Hilfe des dritten Mikroprozessorsystems 4 (MP1)lokalisiert und eine ABS-Bremsung auf Basis der von dem intakten Mikroprozessorsystem MP2 oder MP3 errechneten Daten, wenn diese der Überprüfung auf Basis des vereinfachten Logarithmus mit Hilfe des Mikroprozessorsystems MP1 standhalten, zugelassen. Dies ist ein Beispiel von vielen.

Mit Hilfe der erfindungsgemäßen Mikroprozessoranordnung läßt sich folglich ein hohes Sicherheitsniveau erreichen. Einerseits führen Fehler, die für die Fahrsicherheit kritisch sind, zur Abschaltung der Regelung. Andererseits ist es gewährleistet, daß bei anderen, relativ unkritischen Fehlfunktionen die Regelung vollständig oder eingeschränkt - z.B bis zur Beendigung eines Regelungsvorgangs - fortgeführt wird. Diese "Abstufung" des Sicherheitskonzeptes ist ganz besonders bei komplexen Regelungssystemen, die sehr unterschiedliche Regelungsfunktionen vereinen, ein entscheidender Vorteil.

## Patentansprüche

1. Mikroprozessoranordnung für ein Fahrzeug-Regelungssystem, mit mehreren, untereinander durch Bus-Systeme verbundenen Mikroprozessorsystemen, die eine Blockierschutz- und/oder Antriebsschlupfregelung und mindestens eine weitere, rechenaufwendige Regelung sowie eine Signal-Aufbereitung, in der das Drehverhalten der Räder wiedergebende Eingangssignale aufbereitet werden, einschließen, wobei zur Fehlererkennung ein Teil der Datenverarbeitung in mehreren Mikroprozessorsystemen redundant und ein Teil der Datenverarbeitung zusätzlich nach vereinfachten Algorithmen ausgeführt werden, **dadurch gekennzeichnet, daß** die Mikroprozessoranordnung zwei Haupt-Mikroprozessorsysteme (5,6) enthält, die zur redundanten Datenverarbeitung zumindest von Teilfunktionen (ABS, ASR, EBV, ASMS) des Regelungssystems dienen, daß die Signal-Aufbereitung (SC) und die Verarbeitung nach vereinfachten Algorithmen in einem dritten Mikroprozessorsystem (4) untergebracht sind und daß die Ausgangs- und/oder Zwischenergebnisse der in den Haupt-Mikroprozessorsystemen (5,6) ablaufenden Datenverarbeitung untereinander auf Übereinstimmung verglichen und jeweils mit den Ausgangs- und/oder Zwischenergebnissen der vereinfachten Datenverarbeitung auf Plausibilität verglichen bzw. überprüft werden.

2. Mikroprozessoranordnung nach Anspruch 1, **dadurch gekennzeichnet, daß** bei Vergleich und Auswerten der redundant verarbeiteten Daten zwischen sicherheitskritischen und funktionswesentlichen Daten unterschieden wird.

3. Mikroprozessoranordnung nach Anspruch 2, **dadurch gekennzeichnet, daß** bei Diskrepanzen zwischen den redundant verarbeiteten sicherheitskritischen Daten das gesamte Fahrzeug-Regelungssystem oder zumindest die von den nicht übereinstimmenden Daten betroffenen Regelungen abgeschaltet werden.

4. Mikroprozessoranordnung nach Anspruch 2, **dadurch gekennzeichnet, daß** bei Diskrepanzen zwischen den funktionswesentlichen Daten durch den individuellen Vergleich der Daten der beiden Haupt-Mikroprozessorsysteme (5,6) mit den Ergebnissen der vereinfachten Datenverarbeitung in dem dritten Mikroprozessorsystem (4) das fehlerhafte Haupt-Mikroprozessorsystem (5 oder 6) ermittelt und die Regelungsfunktionen mit Hilfe des intakten Haupt-Mikroprozessorsystems (5 oder 6) und des dritten Mikroprozessorsystems (4) vollständig oder eingeschränkt fortgesetzt werden.

5. Mikroprozessoranordnung nach Anspruch 4, **dadurch gekennzeichnet, daß** beim Auftreten von Diskrepanzen zwischen den Datenverarbeitungs-Ergebnissen der Haupt-Mikroprozessorsysteme (5,6) nacheinander diese beiden Haupt-Mikroprozessorsysteme weggeschaltet werden und daß, wenn nach dem Wegschalten eines der Haupt-Mikroprozessorsysteme (5,6) die Datenverarbeitungs-Ergebnisse mit den Ergebnissen der vereinfachten Datenverarbeitung übereinstimmen bzw. plausibel sind, die Regelungsfunktionen auf Basis des ordnungsgemäßen, intakten Haupt-Mikroprozessorsystems(5 oder 6) und der Überwachung auf Plausibilität zumindest eingeschränkt fortgesetzt werden.

6. Mikroprozessoranordnung nach Anspruch 5, **dadurch gekennzeichnet, daß** auf Basis des ordnungsgemäßen Haupt-Mikroprozessorsystems (5,6) und der Überwachung durch das dritte Mikroprocessorsystem (4) nur die funktionswesentlichen, nicht die sicherheitskritischen Datenverarbeitungs-Vorgänge und Regelungsfunktionen fortgesetzt werden.

7. Mikroprozessoranordnung nach Anspruch 4, **dadurch gekennzeichnet, daß** beim Auftreten von Diskrepanzen zwischen den Datenverarbeitungs-Ergebnissen der Haupt-Mikroprozessorsysteme (5,6) die Datenverarbeitung und Regelung auf Basis der Ergebnisse, die den durch die vereinfachte Datenverarbeitung ermittelten Ergebnissen näher sind, fortgesetzt werden.

8. Mikroprozessoranordnung nach einem oder mehreren der Ansprüche 1 bis 7, **dadurch gekennzeichnet, daß** beim Auftreten von Diskrepanzen in Abhängigkeit von dem Maß oder der Anzahl der Nichtübereinstimmungen pro Zeiteinheit bestimmte Regelungsfunktionen oder Systemfunktionen aufgehoben werden, wobei zwischen sicherheitskritischen und unkritischen, funktionswesentlichen Regelungs- und Systemfunktionen unterschieden wird.

## Claims

1. A microprocessor configuration for a control system of a vehicle with a plurality of microprocessor systems which are interconnected by bus systems and include an antilock and/or traction slip control system and at least one further control system, which requires complex computing operations, as well as a signal conditioning system which conditions input signals representing the rotational behaviour of the wheels, wherein for the purpose of error detection one part of the data processing is performed redundantly in a plurality of microprocessor systems and one part of the data processing is additionally performed in accordance with simplified algorithms,
**characterized in that** the microprocessor configuration includes two master microprocessor systems (5,6) which serve the redundant data processing at least of partial functions (ABS, TCS, EBD, ASMS) of the control system; **in that** the signal conditioning (SC) and processing in accordance with simplified algorithms are installed in a third microprocessor system (4); and **in that** the output results and/or intermediate results of data processing taking place in the master microprocessor systems (5,6) are compared amongst each other for concurrence and each time are compared and checked, respectively, for plausibility with the output and/or intermediate results of the simplified data processing.

2. A microprocessor configuration as claimed in claim 1,
**characterized in that**, in comparing and evaluating the redundantly processed data, one differentiates between safety-critical and functionally essential data.

3. A microprocessor configuration as claimed in claim 2,
**characterized in that**, in case of discrepancies between the redundantly processed safety-critical data, the entire control system of the vehicle or, at least, the control systems concerned by the non-concurrent data are switched off.

4. A microprocessor configuration as claimed in claim 2,
**characterized in that**, in case of discrepancies between the functionally essential data, the defective master microprocessor system (5 or 6) is identified by means of the individual comparison of the data of the two master microprocessor systems (5,6) with the results of the simplified data processing in the third microprocessor system (4), and **in that** the control functions are continued completely or restrictedly by means of the intact microprocessor system (5 or 6) and the third microprocessor system (4).

5. A microprocessor configuration as claimed in claim 4,
**characterized in that**, upon the occurrence of discrepancies between the data processing results of the master microprocessor systems (5,6), these two master microprocessor systems are deactivated one after the other, and **in that**, if after deactivation of one of the master microprocessor systems (5,6) the data processing results concur with the results of the simplified data processing or rather are plausible, the control functions will at least be continued restrictedly on the basis of the valid, intact master microprocessor system (5 or 6) and on the basis of the monitoring for plausibility.

6. A microprocessor configuration as claimed in claim 5,
**characterized in that**, on the basis of the valid master microprocessor system (5,6) and on the basis of the monitoring by means of the third microprocessor system (4), only the functionally essential data processing operations and control functions will be continued, not the safety-critical ones.

7. A microprocessor configuration as claimed in claim 4,
**characterized in that**, upon the occurrence of discrepancies between the data processing results of the master microprocessor systems (5,6), the data processing and control are continued on the basis of the results which are closer to the results established by the simplified data processing.

8. A microprocessor configuration as claimed in anyone or in more of claims 1 to 7,
**characterized in that**, upon the occurrence of discrepancies, certain control functions or system functions are cancelled in dependence on the extent or number of non-concurrences per time unit, a distinction being made between safety-critical and uncritical, functionally essential control functions and system functions.

## Revendications

1. Agencement de microprocesseur pour un système de régulation de véhicule, comprenant plusieurs systèmes de microprocesseur reliés entre eux au moyen de systèmes de bus, qui incluent une régulation antiblocage et/ou une régulation du glissement de traction et au moins une autre régulation exigeant beaucoup de calcul, ainsi qu'une mise en forme de signaux, dans laquelle des signaux d'entrée reproduisant le comportement de rotation des roues sont mis en forme, tandis que, pour la constatation de défauts, une partie du traitement de données est exécutée d'une manière redondante dans plusieurs systèmes de microprocesseur et une partie du traitement de données est exécutée en outre en conformité avec des algorithmes simplifiés, **caractérisé en ce que** l'agencement de microprocesseur contient deux systèmes de microprocesseur principaux (5, 6), qui servent au traitement de données redondant d'au moins des fonctions partielles (ABS, ASR, EBV, ASMS) du système de régulation, **en ce que** le traitement de signaux (SC) et le traitement en conformité avec des algorithmes simplifiés sont placés dans un troisième système de microprocesseur (4), et **en ce que** les résultats de sortie et/ou résultats intermédiaires du traitement de données se déroulant dans les systèmes de microprocesseur principaux (5, 6) sont comparés entre eux en ce qui concerne une concordance et sont chacun comparés ou vérifiés en ce qui concerne la plausibilité par rapport aux résultats de sortie et/ou résultats intermédiaires du traitement de données simplifié.

2. Agencement de microprocesseur suivant la revendication 1, **caractérisé en ce que**, lors d'une comparaison et une analyse des données traitées d'une manière redondante, une distinction est faite entre des données critiques en ce qui concerne la sécurité et des données importantes pour le fonctionnement.

3. Agencement de microprocesseur suivant la revendication 2, **caractérisé en ce qu'**en cas de non concordances entre les données critiques en ce qui concerne la sécurité traitées d'une manière redondante, l'ensemble du système de régulation de véhicule ou au moins les régulations concernées par les données non concordantes sont mis hors service.

4. Agencement de microprocesseur suivant la revendication 2, **caractérisé en ce qu'**en cas de non concordances entre les données importantes pour le fonctionnement, le système de microprocesseur principal (5 ou 6) défectueux est déterminé au moyen de la comparaison individuelle des données des deux systèmes de microprocesseur principaux (5, 6) par rapport aux résultats du traitement de données simplifié dans le troisième système de microprocesseur (4), et les fonctions de régulation sont poursuivies d'une mamère complète ou limitée au moyen du système de microprocesseur principal (5 ou 6) intact et du troisième système de microprocesseur (4).

5. Agencement de microprocesseur suivant la revendication 4, **caractérisé en ce que**, lors de l'apparition de non concordances entre les résultats de traitement de données des systèmes de microprocesseur principaux (5, 6), ces deux systèmes de microprocesseur principaux sont mis hors service l'un après l'autre et **en ce que**, lorsqu'après la mise hors service de l'un des systèmes de microprocesseur principaux (5, 6), les résultats de traitement de données concordent avec les résultats du traitement de données simplifié ou sont plausibles, les fonctions de régulation sont poursuivies, au moins d'une manière limitée, sur la base du système de microprocesseur principal (5 ou 6) intact, à comportement normal, et de la surveillance de la plausibilité.

6. Agencement de microprocesseur suivant la revendication 5, **caractérisé en ce que**, sur la base du système de microprocesseur principal (5, 6) à comportement normal et de la surveillance au moyen du troisième système de microprocesseur (4), seules sont poursuivies les opérations de traitement de données et fonctions de régulation importantes pour le fonctionnement, et non critiques en ce qui concerne la sécurité.

7. Agencement de microprocesseur suivant la revendication 4, **caractérisé en ce que**, lors de l'apparition de non concordances entre les résultats de traitement de données des systèmes de microprocesseur principaux (5, 6), le traitement de données et la régulation sont poursuivis sur la base des résultats qui sont plus proches des résultats déterminés au moyen du traitement de données simplifié.

8. Agencement de microprocesseur suivant une ou plusieurs des revendications 1 à 7, **caractérisé en ce que**, lors de l'apparition de non concordances, il est mis fin à des fonctions de régulation ou des fonctions de système, déterminées, en fonction de la mesure ou du nombre des non concordances par unité de temps, tandis qu'une distinction est faite entre des fonctions de régulation et fonctions de système critiques en ce qui concerne la sécurité et des fonctions de régulation et fonctions de système importantes pour le fonctionnement, non critiques.
